# EUROPEAN PATENT SPECIFICATION

(11) **EP 3 906 186 B1**
(45) Date of publication and mention of the grant of the patent: **21.02.2024**
(21) Application number: 19845721.0
(22) Date of filing: 30.12.2019
(51) Int. Cl.: B62K 25/28, B62M 7/02, B62M 11/02, B62M 11/16, B62M 9/02, B62K 25/00

(54) **MOTORCYCLE, OF THE SCOOTER TYPE OR WITH CHAIN DRIVE, COMPRISING A QUADRILATERAL REAR SUSPENSION**
MOTORRAD VOM ROLLERTYP ODER MIT KETTENTRIEB MIT EINER VIERECKIGEN HINTERAUFHÄNGUNG
MOTOCYCLETTE, DE TYPE SCOOTER OU À ENTRAÎNEMENT À CHAÎNE, COMPRENANT UNE SUSPENSION ARRIÈRE QUADRILATÉRALE

(30) Priority: 31.12.2018 IT 201800021535
(43) Date of publication of application: 10.11.2021
(73) Proprietor: Piaggio & C. SpA, 56025 Pontedera (IT)
(72) Inventor: RAFFAELLI, Andrea, 56025 Pontedera (IT)
(74) Representative: Savi, Massimiliano
(86) International application number: PCT/IB2019/061426
(87) International publication number: WO 2020/141430

(56) References cited:
- EP-A2- 0 279 763
- DE-U1- 8 010 463
- ES-A6- 2 028 699
- US-A- 4 434 868

## Description

The present invention falls within the scope of manufacturing motorcycles and motor vehicles. The present invention in particular relates to a motorcycle provided with a rear suspension with quadrilateral configuration, in which said motorcycle is of the scooter type or of the type with chain drive and motor installed on the frame.

### BACKGROUND ART

Among the various types of motorcycles available on the market, those referred to as scooters or motorscooters are largely requested and marketed. These motorcycles stand out for the presence of a frame which substantially is open in the middle part, and a footboard, which allow the motorcyclist to maintain a driving position with a straight trunk and with legs close and parallel.

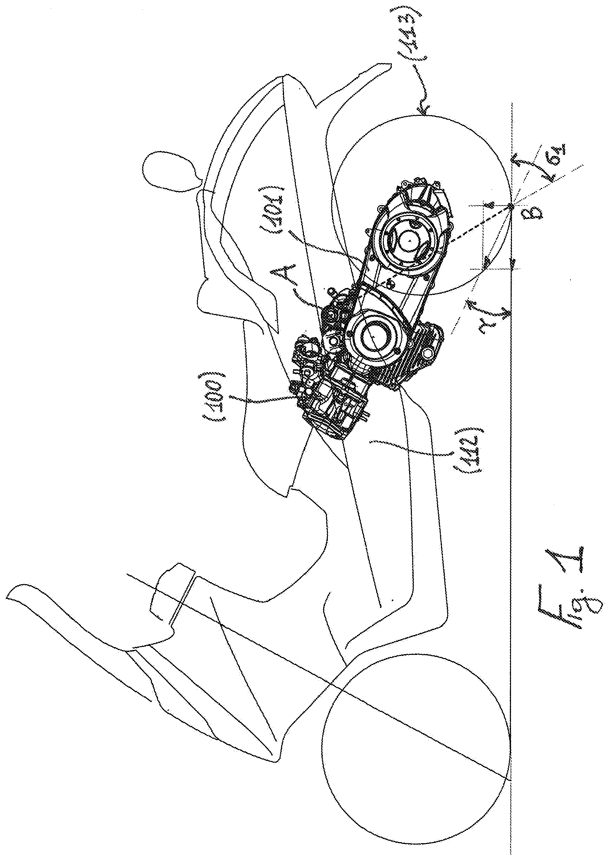

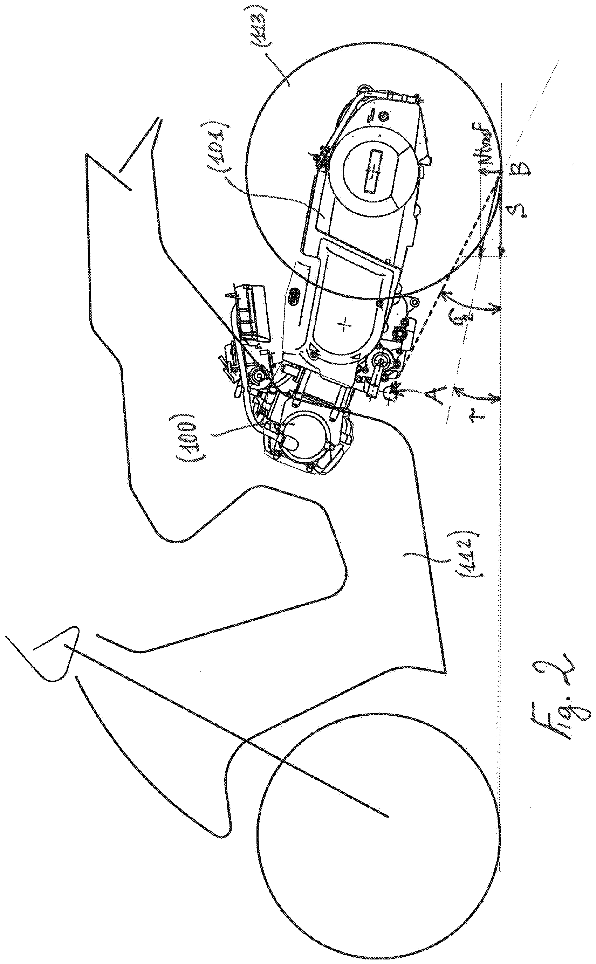

Figures 1 and 2 are diagrammatic views of a motorcycle of the scooter type; as compared to most other motorcycles, the scooter stands out for the fact that the motor (100) is not installed to the frame (112), rather it is included in the structure of the swingarm (101) of the rear suspension. The swingarm (101) is hinged to the frame by means of a single fulcrum (indicated with A). The latter therefore allows the swingarm (101) to oscillate with respect to the frame (112) when stressed by the loads weighing on the rear suspension. The rear suspension of the scooter may comprise one or more dampers between the frame (112) and the swingarm (101).

The motor (100) typically is arranged in the upper part of the swingarm (112), this indicating a part closer to the fulcrum (A). The transfer of the motion from the motor to the rear wheel (113) typically occurs by means of a flexible belt drive which provides a driving pulley (also called variator) which by means of the belt, actuates a driven pulley. In many cases, this pulley is not coaxial with the axis of the rear wheel, rather it actuates a geared motor (formed by two or more gears) which comprises a toothed wheel at the end of a grooved shaft on which the rear wheel (113) is directly mounted.

The forces which act on the wheel-swingarm system during the variations in speed of the scooter have been indicated diagrammatically in the mentioned drawings. In particular, the force parallel to ground S (directed forward if the motorcycle is accelerating due to the thrust of the motor, or back if instead the motorcycle is decelerating due to the rear brake) and the load transfer force Ntrasf are identified, the load transfer force being orthogonal to the thrust force S, which is added to the load with the vehicle in gear at null acceleration and is directed upwards with the vehicle accelerating and downwards with the vehicle slowing down. The result of the two forces S and Ntrasf is inclined with respect to a horizontal direction, by an angle τ typically indicated as load transfer angle. The squat angle σ instead is defined as the angle between the horizontal direction and the straight line passing through the contact point of the rear wheel (indicated with B) and through the point (A) at which the swingarm (101) is hinged to the frame (112).

The ratio between the tangents of the two angles τ, σ defined above typically is indicated with the name squat ratio and is indicated here with letter R. As is known, the value of the squat ratio affects the balance of the vehicle. Considering a motorcycle which for example travels at a constant speed, three cases may exist. If the two angles are equal (R=1), the balance of the motorcycle remains substantially unvaried, since there are no momentums acting on the swingarm. If instead, the squat tension angle σ is less than the load transfer angle t (R>1), then the rear suspension tends to become compressed, with subsequent lowering of the rear axle of the motorcycle. Contrarily, when the chain tension ratio is less than 1 (R<1), (σ>τ), then the rear suspension tends to extend, with subsequent raising of the rear axle of the motorcycle.

From what is indicated above, it is apparent how the squat angle σ depends on the position in which the swingarm (101) is hinged to the frame (112). In the case in Figure 1 for example, the fulcrum (A) is positioned in a position close to the underseat and therefore the squat angle (indicated with σ1) is significant. Such a position is typical in scooters with a high seat or such as to allow the transport of two persons. Contrarily in the example in Figure 2, the fulcrum is positioned much lower, for example to allow the possibility of defining a helmet compartment in the portion of frame above the fulcrum itself or in order to keep the seat low. The result is that the squat angle (indicated with σ2) is much smaller than that in Figure 1 (σ2<σ1). In any case, the fulcrum (A) always constitutes the middle of instantaneous rotation for the suspension under any motion condition and under any load condition to which the suspension is subjected.

As is known, the manufacturers of scooters develop/design the motor-swingarm block by assigning the position of the fulcrum according to a reference frame. Not being able to change or develop a new block for each new model or frame intended for the market for obvious reasons, the manufacturers have the need to use the same block on various scooter models, i.e. to connect such a block on frames configured differently from the reference frame whereby the block was conceived. Therefore, it is apparent that there are not always several positions which are useful for connecting the block to the frame while ensuring a given gap from the ground for the motor oil pan and for a helmet compartment in the upper part. In certain cases, the positioning margin is in the order of centimeters and sometimes, millimeters.

In the current state, the position of fulcrum A is selected by searching for the one, among the possible positions allowed by the structure of the frame, which causes a relatively small variability of the loads on the rear suspension within certain limits. This also in order to contain the stress to which the tire of the rear wheel is subjected. However, the Applicant has encountered that this design approach is not satisfactory, and in many cases, results in just as poor performance in reference to the behavior of the suspension and more in general, of the balance of the vehicle. In particular, the Applicant has encountered how the same configuration of the rear suspension, which in fact consists of the swingarm alone and possibly of one or two dampers, is apparently ineffective for ensuring a correct balance of the vehicle.

The Applicant has also ascertained how problems similar to those described above (squat angle and balance of the vehicle) involve different motorcycles from scooters, such as for example motorcycles with chain drive. Also in this case, the rear suspension provides a swingarm and one or more dampers between such a swingarm and the frame. The motor in these motorcycles is installed on the frame and drags a toothed wheel which is integral with the rear wheel, into rotation by means of a chain. In this embodiment, in addition to the orientation of the swingarm, the squat angle (also called chain tension angle) also depends on the direction of the taught branch of the chain. In any case, it has often been seen how the behavior of the suspension is not satisfactory due to a "wrong" value of the squat angle.

On the other hand, it would appear unthinkable, or not very reasonable, to improve the distribution of the loads on the suspension, and more in general the response thereof, by making use of electronic-type dampers which in addition to being costly, also require a very complicated control. These aspects are unacceptable, especially for motorcycles of the scooter type, the final cost of which is to be relatively lower than that of other motor vehicles.

DE 80 10 463 U1 discloses a motorcycle comprising a frame and a rear wheel operatively connected to said frame by means of a rear suspension comprising a swingarm hinged to said frame so as to rotate about a first rotation axis, said frame supporting a motor and a mechanical drive to transfer a torque generated by said motor to said rear wheel, said mechanical drive comprising at least a first drive element hinged to said swingarm and a first drive unit to transfer said torque to said first drive element, wherein said first drive unit comprises a pinion, hinged to said frame and operated by said motor, a crown gear which is integral with said first drive element, and a chain between said pinion and said crown gear, wherein said mechanical drive comprises a second drive unit for transmitting the motion from said first drive element to said rear wheel, wherein said second drive unit comprises at least a second drive element which is rotationally integral with said rear wheel and at least one intermediate drive element for transmitting the motion from said first drive element to said second drive element, wherein said rear suspension further comprises a connecting rod hinged to said swingarm so as to rotate about a second rotation axis, wherein said connecting rod supports said at least one intermediate drive element, said rear suspension further comprising a rod rotatably connected to said connecting rod so as to rotate about a third rotation axis and rotatably connected to said frame so as to rotate about a fourth rotation axis.

In respect of these considerations, the need thus arises to provide a new technical solution which allows the correct squat angle to be established with greater ease, and more in general capable of ensuring an improved balance of the motorcycle without acting on the structure of the damper, i.e. without resorting to using electronically-controlled dampers or systems having mechanical or hydraulic interconnection between the front and rear suspensions.

### SUMMARY

In respect of the considerations above, it is the main task of the present invention to provide a motorcycle which allows the above-indicated limits to be overcome or at least reduced. Within the scope of this task, it is a first object of the present invention to provide a motorcycle, of the scooter type or of the type with chain drive and motor installed on the frame, in which the rear suspension allows the squat angle optimized to the structure of the frame to be optimized. It is another object of the present invention to provide a motorcycle, of the scooter type or of the type with chain drive and motor installed on the frame, which has a rear suspension which allows the variability of the loads to be absorbed more effectively, and therefore allows an improved response and a more stable balance. It is another object to provide a motorcycle, of the scooter type or of the type with chain drive and motor installed on the frame, in which the same variability of the loads/momentums which act on the suspension is lower than that currently occurring in the known solutions. It is a further object of the present invention to provide a motorcycle, of the scooter type or of the type with chain drive and motor installed on the frame, which is reliable and easy to make at competitive costs. The present invention is based on the general consideration of overcoming the technical problem and achieving the objects indicated above by modifying the classic geometry of the suspension of the motorcycle of the scooter type, and more specifically, by introducing the elements which give a quadrilateral configuration to such a suspension.

A first aspect of the present invention relates to a motorcycle of the scooter type as set out in claim 1. A second aspect of the present invention relates to a motorcycle as set out in claim 10.

By introducing the connecting rod and the rod provided in the present invention, a radical transformation of the rear suspension is caused as compared to the classical configuration implemented in the motorcycles, scooters which provides the swingarm alone for connecting the rear wheel to the frame. By means of these components, in particular the rear suspension advantageously takes a quadrilateral configuration which allows an easier management of the squat angle and a more predictable behavior for the suspension in general. The new quadrilateral conformation is possible due to the mechanical disconnection between the first drive element and the rear wheel introduced by using the second drive unit.

According to a first possible embodiment, the rotation axis of said first drive element is coaxial with the rotation axis of said second drive element, and the rotation axis of the intermediate drive element is parallel and not coaxial to the axis of the first drive element.

In an alternative embodiment, the second rotation axis which is characteristic of the rear suspension (axis about which said connecting rod rotates with respect to said swingarm), is coaxial with the rotation axis of said first drive element and the rotation axis of the second drive element.

Within the scope of the first possible embodiment indicated, the first element preferably comprises a first toothed wheel defined at the end of a first shaft which is rotatable with respect to the swingarm; the second element comprises a second toothed wheel defined at the end of a second shaft which is integral with the rear wheel; said intermediate element comprises a third toothed wheel, which engages said first toothed wheel and said second toothed wheel; such an intermediate element further comprises a third shaft rotatably supported by said connecting rod. In a possible embodiment thereof, the connecting rod comprises two opposite portions hinged about the first shaft and said second shaft, respectively; said connecting rod further comprises a transverse portion which connects the opposite portions; the rod is connected to the connecting rod at the transverse portion.

According to a second possible embodiment, the second drive unit comprises a plurality of intermediate drive elements operatively connected to said first element and to said second element so as to configure an epicyclic gear.

Within the scope of the second embodiment, the first element comprises a first toothed wheel defined at the end of a first shaft which is rotatable with respect to the swingarm; the second element comprises a second shaft which is integral with the rear wheel. Such a second shaft supports an inner crown gear. The intermediate elements each comprise a satellite toothed wheel which engages said first toothed wheel and the inner crown gear of the second shaft. The intermediate elements each comprising a shaft which supports a corresponding satellite toothed wheel and is hinged to the connecting rod.

In a further possible embodiment, the motorcycle comprises adjustment means for varying the position of at least one of said rotation axes with respect to the position of said other rotation axes. The adjustment means preferably are configured to vary the position of said fourth rotation axis, which is characteristic of said rear suspension.

### LIST OF THE DRAWINGS

Further features and advantages of the invention shall be more apparent from an examination of the following detailed description of some preferred, but not exclusive, embodiments of the motorcycle of the scooter type, shown by way of non-limiting example, with the support of the accompanying drawings, in which:
- Figures 1 and 2 are diagrammatic views, each related to a configuration of a motorcycle of the scooter type known from the prior art;
- Figure 3 is a diagrammatic view of a first possible embodiment of a motorcycle according to the present invention;
- Figure 4 is a view of a component assembly of the motorcycle in Figure 3;
- Figure 5 is a view according to the sectional plane V-V in figure 4;
- Figure 6 is a diagrammatic view of a second possible embodiment of a motorcycle according to the present invention;
- Figure 7 is a view of a component assembly of the motorcycle in Figure 6;
- Figure 8 is a view according to the sectional plane VIII-VIII in figure 7;
- Figure 9 is a side view of the motorcycle in Figure 6;
- Figures 10 and 10A are views which relate to a possible embodiment of a motorcycle according to the invention, in two different possible configurations thereof;
- Figure 11 is a view related to another embodiment of a motorcycle according to the present invention;
- Figure 12 is a view related to a further possible embodiment of a motorcycle according to the present invention;
- Figure 13 is a diagram related to a further possible embodiment of a component assembly of a motorcycle according to the present invention.

### DETAILED DESCRIPTION

With reference to the mentioned drawings, the present invention relates to a motorcycle 1, preferably but not exclusively of the scooter type, comprising a frame 12, a front wheel 11 and a rear wheel 13. Motorcycle 1 also comprises a motor 100 and a drive unit for transferring the motor torque generated by motor 100, to the rear wheel 13. The rear wheel 13 is connected to frame 12 by means of a rear suspension comprising a swingarm 21 provided with a first end hinged to frame 12 at a first fulcrum which defines a first rotation axis 31 which is characteristic of the suspension. The latter therefore allows swingarm 21 to oscillate with respect to frame 12 about an axis which substantially is horizontal. The drive unit comprises at least a first drive element 51 (hereinafter also indicated as first element 51) which is actuated, that is brought into rotation, by means of a first belt or chain drive unit. Such a first drive unit is directly or indirectly actuated by motor 100. Possible embodiments of such a first drive unit are described later in the description.

In any case, the first element 51 is rotatably supported by swingarm 21. In other words, the first element 51 rotates with respect to swingarm 21 about a first rotation axis 201. Therefore, the first drive element 51 is disassociated from, that is not directly connected to, the rear wheel 13.

According to the invention, the drive unit comprises a second drive unit for transferring the motion from the first element 51 to the rear wheel 13. Such a second unit comprises at least a second drive element 52 (hereinafter also indicated as second element 52) which is rotationally integral with the rear wheel 13.

According to the invention, the rear suspension of the motorcycle comprises at least one support connecting rod 22 (or connecting rod 22) rotatably connected to swingarm 21, preferably so as to rotate about a rotation axis coincident with the first rotation axis 201 of the first drive element 51. The rotation axis between the connecting rod 22 and swingarm 21 thus is a second rotation axis 32 which is characteristic of the suspension.

The connecting rod 22 supports at least an intermediate drive element 53 (hereinafter also indicated as intermediate element 53) of the second drive unit configured to transfer the motion from the first element 51 to the second element 52. The rear suspension also comprises a rod 23 (or reaction rod 23) hinged, at a first end thereof, to the connecting rod 22 so as to rotate about a third rotation axis 33 which is characteristic of the suspension. At a second end (opposite to the first one) thereof, rod 23 is hinged to frame 12 at a second fulcrum so as to rotate about a fourth rotation axis 34 which is characteristic of the rear suspension. Rod 23 avoids the rotation of the support connecting rod 22 and keeps the rotation axis 203 of said at least one intermediate element 53 in a fixed position with respect to swingarm 21, i.e. with respect to frame 12. It is worth noting that the "*fixed*" position is assessed considering the suspension at a given compression value (that is height off the ground). Indeed, when the suspension is raised or lowered, rod 23 follows the movement of the connecting rod 22, the latter being rotatably connected.

Moreover, it is worth noting that the position of the second fulcrum defining the fourth rotation axis 34 on frame 12 is different from the position of the first fulcrum defining the first rotation axis 31 which is characteristic of the rear suspension. Overall, swingarm 21, the support connecting rod 22 and the reaction rod 23 configure, with frame 12, a quadrilateral suspension which, as better specified below, allows an improved management of the squat angle (and therefore of the squat ratio) in a manner which can be attributed to the motorcycles which provide a Cardan-type drive. In particular, the quadrilateral conformation is possible due to the mechanical disconnection between the first drive element 51 and the rear wheel 13. This disconnection is caused by the use of the second drive unit. It is worth noting that the position of the rotation axes 31, 32, 33, 34 (indicated above as characteristic of the rear suspension) defines the geometry of the suspension itself.

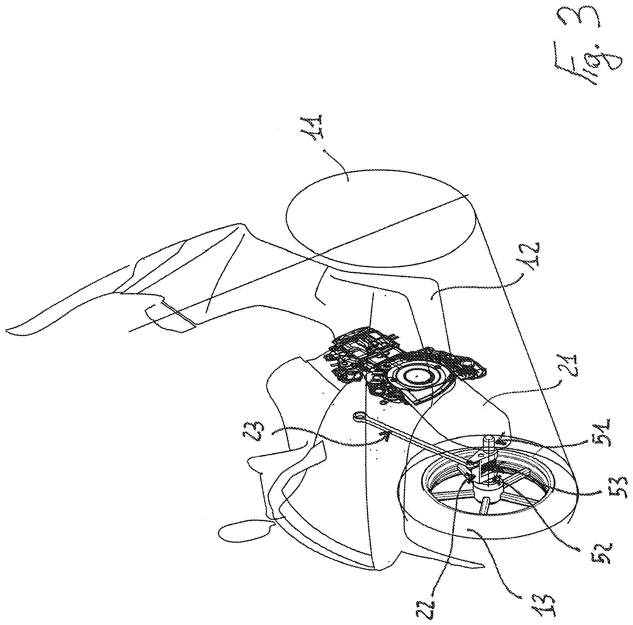

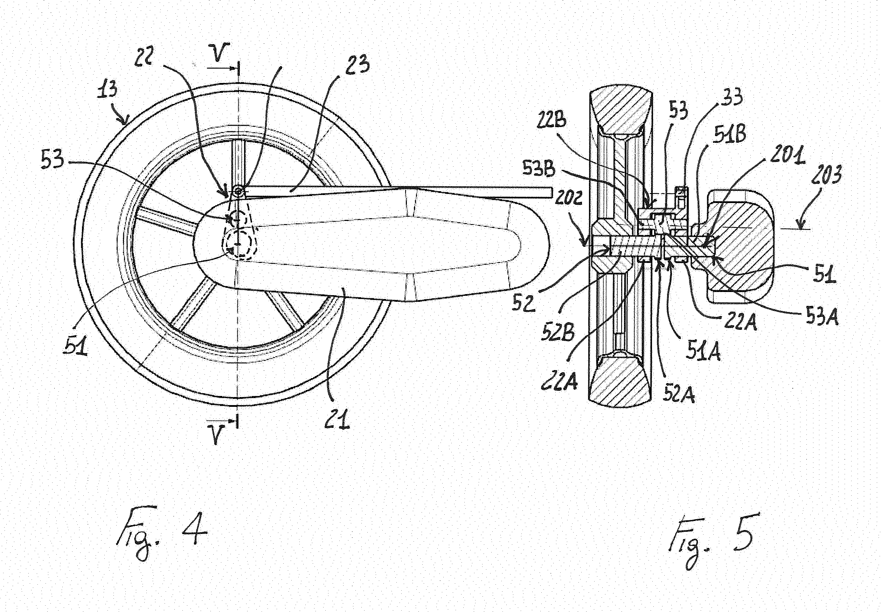

According to a first possible embodiment of the invention (shown in Figures 3 to 5), the first drive element 51 and the second drive unit jointly configure a gear train (toothed wheels) having parallel axes. Preferably, such a gear train (shown in the detailed view in Figure 4) the first element 51 rotates about a rotation axis (indicated with numeral 201) which is coaxial with the rotation axis (indicated with numeral 202) of the second element 52. The rotation axis 203 of the intermediate element 53 instead is parallel to the axes 201 and 202. The rotation axis 201 of the first element 51 and the rotation axis 52 of the second element coincide with the second rotation axis which is characteristic of the suspension, that is the one about which the connecting rod 22 rotates with respect to swingarm 21.

In the possible embodiment shown in Figures 4 and 5, the first element 51 comprises a first toothed wheel 51A defined at the end of a first shaft 51B which is hinged, by means of suitable supports, to swingarm 21. The first shaft 51B is brought into rotation by means of the above-mentioned first drive unit which may be a chain or drive unit, as better specified below. The second element 52 in turn comprises a second toothed wheel 52A defined at the end of a shaft 52B which is integral with the rear wheel 13.

The intermediate drive element 53 comprises a third shaft 53B which supports a third toothed wheel 53A. This engages the first toothed wheel 51A and the second toothed wheel 52A. Such a third shaft 53B is supported by the connecting rod 22 so as to be rotatable with respect to the connecting rod itself. As already indicated above, rod 23 acts on the connecting rod 22 so as to keep the position of the third shaft 53B fixed with respect to frame 12 and to swingarm 21. Also in this case, the term "*fixed*" means a condition assessed for a given compression value of the rear suspension. When the latter operates (that is, is raised or compressed), the position of the third shaft 53B apparently follows the movement of the connecting rod 22 to which it is rotatably connected.

According to a possible embodiment thereof (shown in Figure 5), the connecting rod 22 comprises two opposite portions 22A hinged about the first shaft 51B and the second shaft 52B, respectively. Since it is part of the quadrilateral rear suspension, the connecting rod 22 oscillates with respect to swingarm 21 when the suspension is compressed towards the ground. Therefore, it rotates about the second rotation axis which is characteristic of the suspension which coincides with the rotation axis 201 of the first element 51 and the rotation axis 202 of the second element 52 which are coaxial to each other.

The connecting rod 22 further comprises also a transverse portion 22B which connects the two opposite portions 22A. Rod 23 is hinged at an end of the transverse portion 22B so as to be rotatable about the third rotation axis 33 according to what is indicated above. Overall, the two opposite portions 22A and the transverse portion 22B give a substantially fork-like configuration to at least a part of the connecting rod 22. The third shaft 53A of the intermediate element 53 is supported at the ends thereof by two opposite portions 22A so that the rotation axis 203 thereof is parallel to and not coaxial with the rotation axis 201 of the first shaft 51A and to the rotation axis of the second shaft 52A.

In the embodiment shown in Figures 3 to 5, the first drive element 51 and the second drive unit 52 are configured to develop a drive ratio equal to 1. Indeed, the first toothed wheel 51A and the second toothed wheel 52A have the same diameter and the intermediate element 53 comprises one wheel 53A alone which engages the ones mentioned above. However, the possibility of configuring the second drive unit in a different manner falls within the scope of the present invention, for example so that it develops a drive ratio which is less than 1. In this regard, the second toothed wheel 52A could have a smaller diameter than the first toothed wheel 51A. At the same time, two toothed wheels with various diameters could be defined on the third shaft 53B of the intermediate element 53, one with smaller diameter which engages with the first toothed wheel 52A and the other with larger diameter which engages with the second toothed wheel 52B.

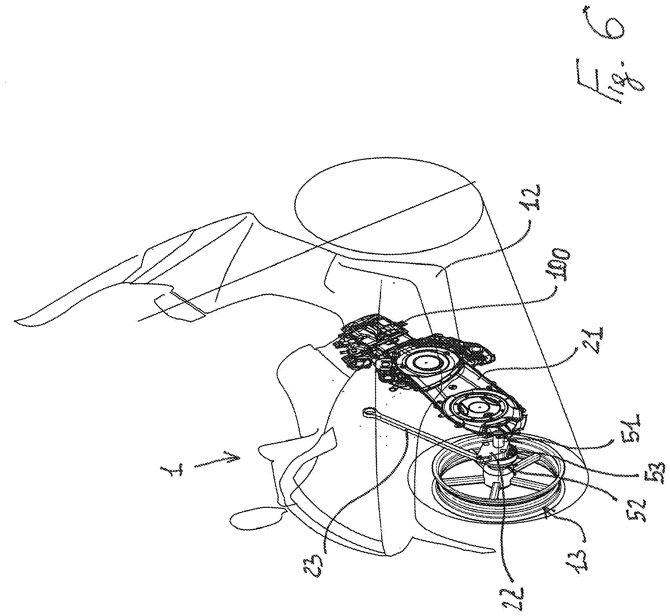

According to an embodiment not shown and alternative to the one described (that is, alternative to the one shown in Figure 5), rather than comprising cylindrical toothed wheels, the gear train could comprise conical toothed wheels. In this hypothesis, the rotation axis of the intermediate drive element 53 would be orthogonal to the rotation axis of the first drive element 51 and of the second drive element. Again in this hypothesis, the support connecting rod 22 could have a "*fork-shaped*" part, as described above. Here, the intermediate drive element 53 could be rotatably supported by the transverse part 22B. It is worth noting that in this hypothetical embodiment, due to the use of conical toothed wheels and due to the presence of rod 23 which acts on the connecting rod 22, the second element 52 would rotate about the rotation axis 202 thereof in a direction opposite to the one in which the first element 51 would rotate about the rotation axis 201 thereof. According to a further embodiment shown in Figures 6 to 9, the second drive unit comprises a plurality of intermediate drive elements 53. In this embodiment in particular, the first drive element 51, the second drive element 52 and the intermediate drive elements 53 jointly configure an epicyclic gear.

In this further embodiment more specifically, the first element 51 brings into rotation the intermediate elements 53 which are all supported by the connecting rod 22. The rotation axes 203 of the intermediate elements 53 maintain a fixed position due to rod 23, which prevents the connecting rod 22 from rotating. Thus, the rotation of the intermediate elements 53 is transferred to the second element 52 and therefore, to the rear wheel 13.

In addition to the function of transferring the motion to the rear wheel 13, the epicyclic gear thus formed may operate as reducer, developing a drive ratio between the first element 51 and the second element 52 which is less than 1. Also in this embodiment, the first drive element 51 comprises a first shaft 51A and a toothed wheel 51B at the end of the first shaft 51A. The second drive element 52 comprises a second shaft 52B keyed onto the rear wheel 13, at the end of which an inner crown gear 52B is defined. This expression means a hollow body defining an inner surface on which a toothing is defined.

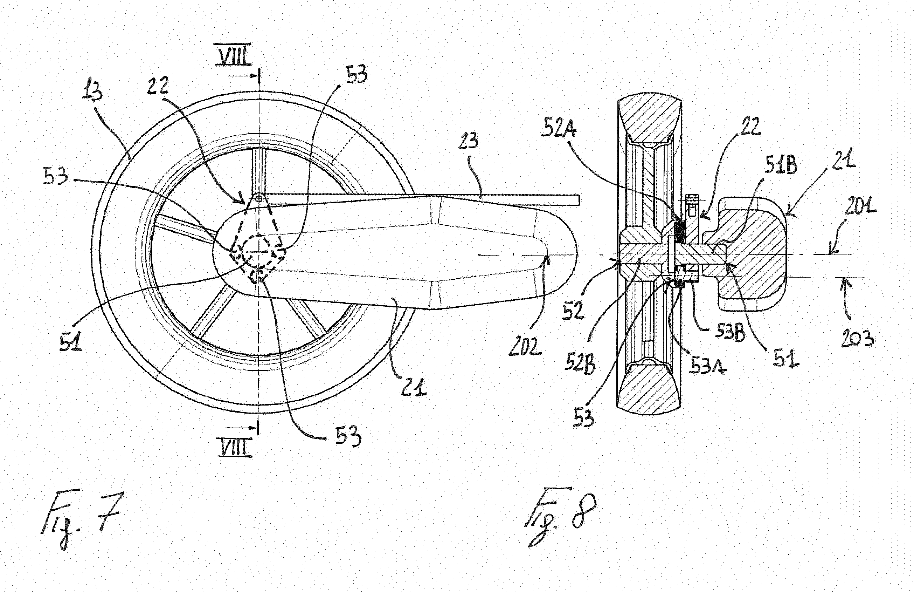

The first shaft 51B is coaxial with the second shaft 52B so that the inner crown gear 52B and the toothed wheel 51B are coaxial. The intermediate drive elements 53 each comprise a satellite wheel 53B at the end of a shaft hinged to the body of the support connecting rod 22. Each satellite wheel 53B engages the first toothed wheel 51B and the inner crown gear 52B. Following the rotation thereof caused by the first drive element 51, the intermediate drive elements 53 bring the crown gear 52B, and accordingly the rear wheel, into rotation. Such results are achieved due to the stable position of the connecting rod 22 ensured by means of rod 23. It is worth noting that due to the conformation of the epicyclic gear described above (clearly shown in Figure 8), the second rotation element 52 rotates in a direction which is opposite to the rotation direction of the first rotation element 51.

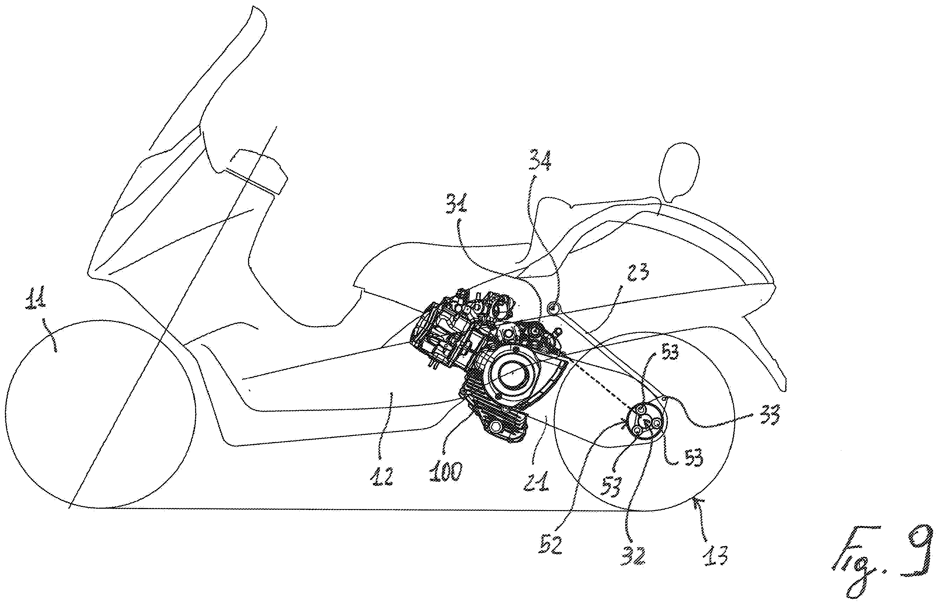

There preferably are provided three intermediate drive elements 53, and therefore three satellite wheels 53B, which are supported by the connecting rod 22 so that the rotation axes thereof are arranged at 120° from one another about the rotation axis 201 of the first drive element 51 (see Figure 9). The epicyclic gear described above therefore comprises a satellite-holder consisting of the connecting rod 22 which supports the intermediate drive elements (53), i.e. the satellite gears, which engage the solar wheel consisting of the first toothed wheel 51B and the peripheral crown consisting of the inner crown gear 52B.

With reference to Figures 6 and 8 in particular, the connecting rod 22 is hinged about the first shaft 51B of the first drive element 51 also in this embodiment. The results are that, also in this case, the second rotation axis which is characteristic of the suspension, coincides with the rotation axis of the first shaft 51B, i.e. of the first drive element 51. Again with reference to Figure 9, the third rotation axis 33 which is characteristic of the suspension (axis of mutual rotation between the connecting rod 22 and rod 23) is positioned above the rotation axis of the rear wheel 13 and above the second rotation axis 32 which is characteristic of the suspension (axis of mutual rotation between the connecting rod 22 and swingarm 21). However, the possibility of orienting the connecting rod 22 differently, or more generally of shaping it so as to invert the position of the two rotation axes 32, 33 indicated above, in any case falls within the scope of the present invention, that is so as to bring the connection between connecting rod 22 and rod 23 at a lower height than the one of the connection between connecting rod 22 and swingarm 21.

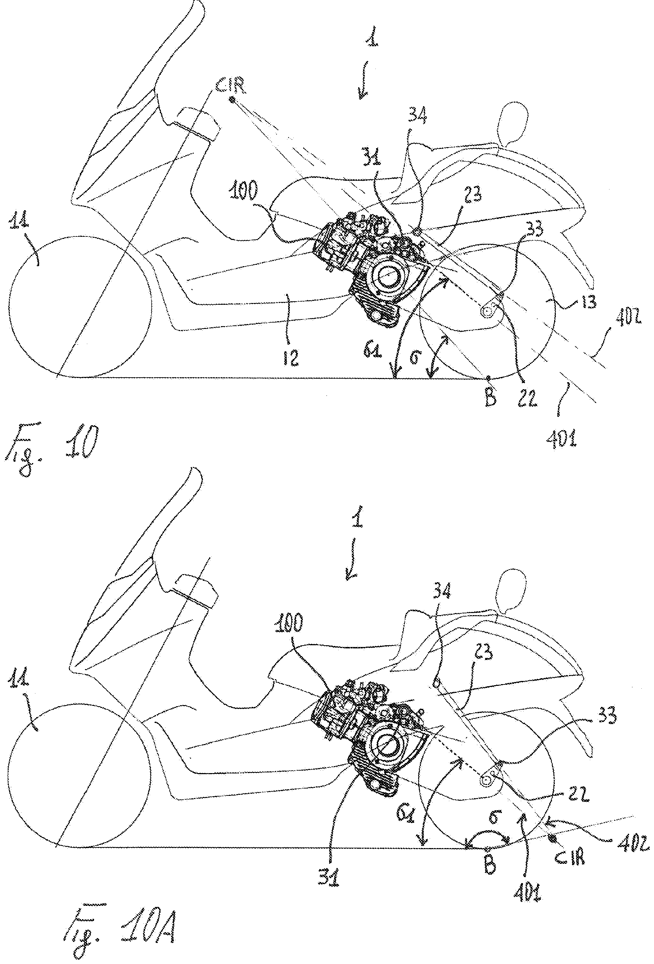

Figures 10 and 10A refer to a possible embodiment of the present invention in which the motorcycle is of the scooter type. In particular, motor 100 is integrated in the structure of swingarm 21. Thus, motor 100 is hinged to frame 12 together with swingarm 21 so as to form a single block oscillating at fulcrum 31 indicated above. In this embodiment, the first drive unit which brings into rotation the first drive element 51 may be shaped in similar manner to a drive unit of those typically used in traditional scooters to bring into rotation the element which is integral with the rear wheel. In particular, the first drive unit may be contained in the structure of swingarm 21 and may comprise a driving pulley (speed variator) fastened to the shaft of motor 100 and a driven pulley hinged to swingarm 21 in a position which is closer to the rear wheel. The belt allows the transmission of the motion between the driving pulley and the driven pulley. Such a first drive unit could moreover comprise a reducer unit interposed between the driven pulley and the first drive element 51. The reducer unit in turn could be formed by one or more gears to reduce the rotation speed of the driven pulley. Thereby, the driving pulley would be given a chance to rotate more quickly, with a lower torque and therefore occupying less space. Said reducer unit could comprise at least one toothed wheel which is integral with the pulley and at least another one which is integral with the first drive element 51 so as to rotate it about the rotation axis 201 thereof.

What is described above is only one possible embodiment of the first drive unit. Thus, the possibility of bringing into rotation the first drive element 51 by means of a first drive unit having a different but functionally equivalent configuration to the one described above, falls within the scope of the present invention.

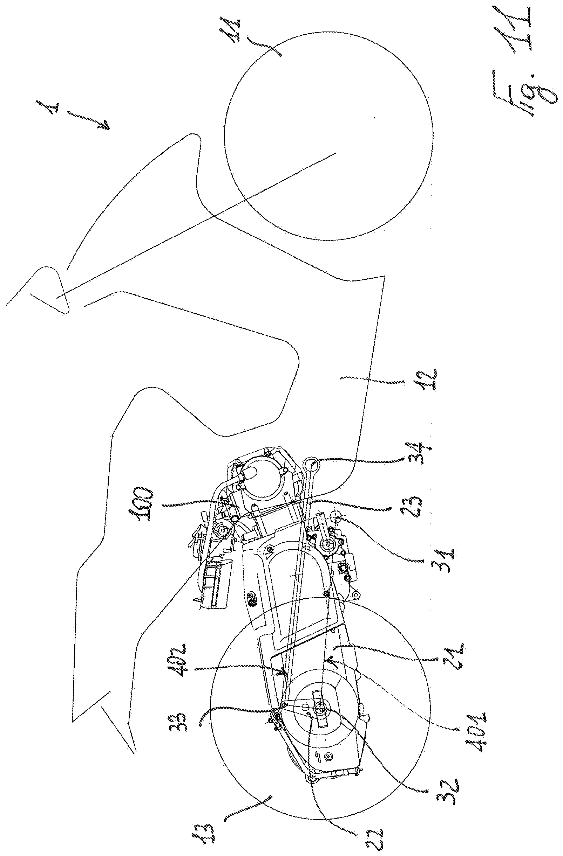

Figures 10 and 10A show the quadrilateral conformation which is taken by the rear suspension of the scooter due to the connecting rod 22 and to the rod 23 according to the present invention. As compared to the prior-art-related scooters, the quadrilateral conformation causes a different squat angle. In particular, the latter becomes identified by the angle between the horizontal direction and the point of intersection between the direction of extension of swingarm 21 (indicated with numeral 401 in Figures 10 and 11) and the direction of extension of rod 23 (indicated with numeral 402 in Figures 10 and 11). More specifically, the expression "*direction of extension of swingarm 21*" means the direction which crosses the first rotation axis 31 and the second rotation axis 32 which is characteristic of the rear suspension. The expression "*direction of extension of rod* 23" means the direction which crosses the third rotation axis and the fourth rotation axis 34 which are characteristic of the rear suspension.

The point of intersection between the two directions 401 and 402 defined above is the center of instantaneous rotation (CIR) of the connecting rod 22 with respect to frame 12. The behavior of the quadrilateral rear suspension is caused by the position which is taken by such a CIR. Such a position continuously varies according to the oscillations of the connecting rod 22 caused for example, by the load conditions (acceleration, braking action) to which the scooter is subjected. Indeed, by supporting one or more elements implicated in the transmission of the motion, the connecting rod 22 suffers from the load variations and therefore oscillates with respect to swingarm 21. Such an oscillation causes a variation of the orientation of the directions 401 and 402.

The quadrilateral configuration allows the extension of the place of the points which may be occupied by the CIR, which usually is indicated with the term roulette or movable pole, to be assessed in design step. Thereby, the possible behavior of the suspension may be provided and optimized according to the loads weighing thereon.

The connecting rod 22 and the transmission mechanism between the first drive element 51 and the rear wheel 13 in Figures 10 and 10A show the above-described configuration in the comments to Figures 3 to 5. In these drawings, motor 100 and the frame 12 of motorcycle 1 have a conformation which substantially corresponds to the one schematized in Figure 1. It is noted from the comparison of these drawings and Figure 1 how a strong variation of the squat angle (indicated with o) and a different variation of the CIR are obtained due to the quadrilateral suspension. In order to comprehend the variation of the squat angle, Figures 10 and 10A also indicate angle σ1, also indicated in Figure 1.

From a comparison between Figures 10 and 10A, it can be noted how the CIR occupies a more or less advanced position with respect to the vehicle, according to the position assigned to the rotation axis 34 (inside which rod 23 rotates with respect to frame 12). Therefore, in the design step, it is possible to select the most suitable position to be assigned to the second fulcrum, i.e. to the fourth rotation axis 34 to obtain a given roulette and therefore a given behavior of the rear suspension.

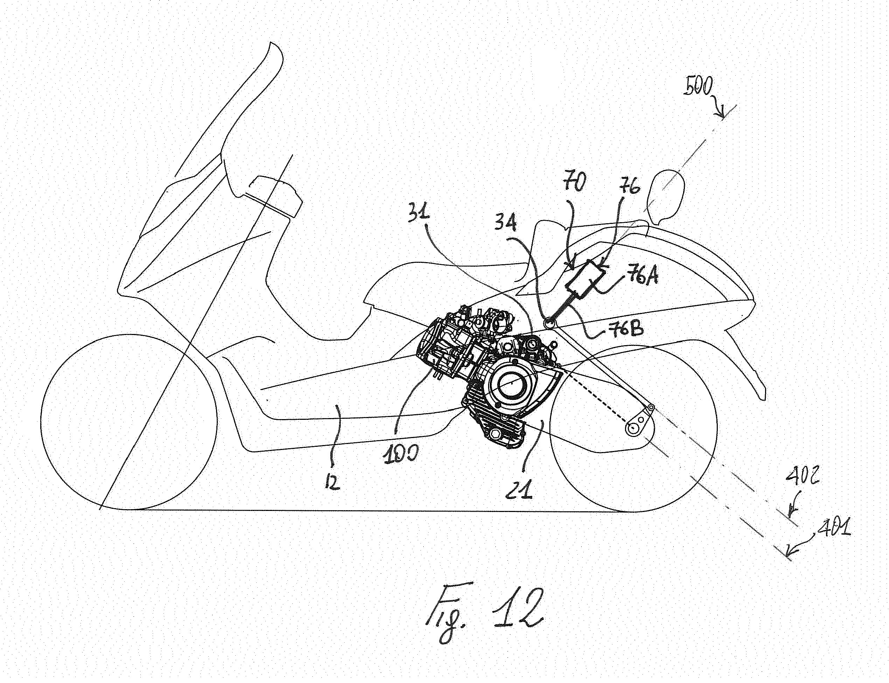

In Figure 11, swingarm 21, motor 100 and the frame 12 of motorcycle 1 have a conformation which substantially corresponds to the one schematized in Figure 2. Figure 11 allows appreciating how the quadrilateral suspension introduced by the present invention may be implemented regardless of the structure of frame 12 of the scooter. In particular, Figure 11 shows how the quadrilateral suspension may be implemented also if the first fulcrum is positioned at a decidedly lower height than the one provided for the other scooters (for example, the one in Figure 10A). Figure 12 is a further embodiment of the invention in which motorcycle 1 comprises adjustment means 70 adapted to vary (and therefore adjust) the position of one of the rotation axes 31, 32, 33, 34 which are characteristic of the rear suspension with respect to the other rotation axes. The variation of the position of at least one of these rotation axes (obtained by means of said adjustment means) causes an alteration of the geometry of the quadrilateral and accordingly, a variation of the squat angle, i.e. a change in the behavior of the suspension in response to the loads, and therefore a different balance. Thus, such adjustment means 70 allow varying the orientation of the squat line and therefore setting a different movable pole along which the CIR moves. Practically, the adjustment means allow a different behavior of the suspension and therefore a different balance of the motorcycle, to be set.

According to a preferred embodiment, the adjustment means 70 are configured to cause a variation of the position of the fourth rotation axis 34 which is characteristic of the suspension. In other words, such adjustment means are configured to vary the position of the second fulcrum by means of which the reaction rod 23 is hinged to frame 12.

In this regard, the adjustment means 70 in Figure 12 comprise an actuator 76 which may be of the electric type or alternatively of the hydraulic type, comprising a fixed part 76A connected to frame 12 and a movable part 76B (or rod 76B) directly or indirectly connected, by means of another element, to the second fulcrum defining the fourth rotation axis 34. The connection with said second fulcrum is particularly configured so that a movement of the rod (extending or returning in the fixed part) causes a corresponding displacement of the second fulcrum along the rectilinear path identified by the longitudinal direction of rod 76B (direction indicated with 500 in Figure 12). Such a displacement translates into a variation of the orientation of the second reference direction 402 defined above. Alternatively, the fixed part 76A could also be simply hinged to frame 12 so as to displace said second fulcrum along a circular path which is concentric to the third rotation axis 33 which is characteristic of the suspension (mutual rotation axis between the connecting rod 22 and rod 23).

In general, the adjustment means 70 can be configured and operate in a manner corresponding to those shown in Figures 4, 5, 6 and 7 and described (in the sections referring to such drawings) in Patent Application IT102018000021373. According to a possible embodiment, rod 23 could be hinged to frame 12 so that the direction of extension 402 thereof substantially is parallel to the direction of extension 401 of swingarm 21 and so that the length thereof (assessed as the distance between the third rotation axis 33 and the fourth rotation axis 34 which are characteristic of the rear suspension) substantially is equal to the length of swingarm 21 (assessed as the distance between the first rotation axis 31 and the second rotation axis which are characteristic of the rear suspension). The CIR would be positioned in an infinite point due to this arrangement. Therefore, this arrangement would allow the value of the squat angle indicated in Figure 1 to be corrected.

This possible configuration described above is shown in Figure 12 and could be considered as a starting reference configuration for adjusting the position of the fourth rotation axis 34 which is characteristic of the suspension. However, it is apparent that this configuration may be provided irrespective of the presence or absence of the mentioned adjustment means 70.

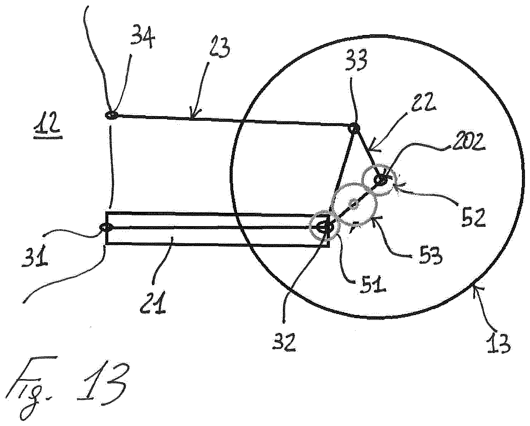

Figure 13 is a diagram related to a further possible embodiment of the present invention, and of the second drive unit in particular. According to this diagram, the first rotation element 51 and the second rotation element 52 are not coaxial. In detail, there is identified the second element 52 which is integral with the rear wheel 13, the first element 51 which is hinged to swingarm 21 and an intermediate element 53 which is hinged to the connecting rod 22 (depicted by a triangle shape). This diagram also identifies the second rotation axis 32 about which the connecting rod 22 rotates with respect to swingarm 21 and the third rotation axis 33 which allows the mutual rotation between the connecting rod 22 and rod 23. According to this diagram, the connecting rod 22 is also hinged about the axis of the rear wheel 13 which coincides with the rotation axis 202 of the second drive element 52. In any case, also in the embodiment schematized in Figure 13, the connecting rod 22 supports at least one element of the second drive unit and therefore suffers from the reaction of the torque generated by the motor. Due to this reaction, the connecting rod 22 oscillates about the axis of the rear wheel 13, therefore generating a related CIR.

It is worth noting that the present invention can also be implemented in a motorcycle of different type than the scooter, and in a motorcycle in which the motor is supported by the frame in particular. Here, the drive unit provided for rotating the first drive element 51 could comprise a pinion hinged to the frame and a crown gear which is integral with the first drive element 51, rotated by the pinion by means of a chain. The quadrilateral suspension and the drive unit according to the present invention can therefore be implemented also in a traditional motorcycle with a chain drive.

## Claims

1. A motorcycle (1) of the scooter type, comprising a frame (12) and a rear wheel (13) operatively connected to said frame (12) by means of a rear suspension comprising a swingarm (21) hinged to said frame (12) so as to rotate about a first rotation axis (31), wherein said swingarm (21) supports a motor (100) which oscillates with said swingarm (21) about said first rotation axis (31), wherein said motorcycle (1) comprises a mechanical drive to transfer a torque generated by said motor (100) to said rear wheel (13), said mechanical drive comprising at least a first drive element (51) hinged to said swingarm (21) and a first drive unit to rotate said first drive element (51), wherein said first drive unit is operated by said motor (100) and supported by said swingarm (21),
wherein said mechanical drive comprises a second drive unit for transmitting the motion from said first drive element (51) to said rear wheel (13), wherein said second drive unit comprises at least a second drive element (52) which is rotationally integral with said rear wheel (13) and at least one intermediate drive element (53) for transmitting the motion from said first drive element (51) to said second drive element (52),
wherein said rear suspension further comprises a connecting rod (22) hinged to said swingarm (21) so as to rotate about a second rotation axis (32), wherein said connecting rod (22) supports said at least one intermediate drive element (53), said rear suspension further comprising a rod (23) rotatably connected to said connecting rod (22) so as to rotate about a third rotation axis (33) and rotatably connected to said frame (12) so as to rotate about a fourth rotation axis (34), and
wherein said rod (23) and said swingarm (21) are prepared so as to define a point of intersection between the direction of extension (401) of the swingarm (21) and the direction of extension (402) of the rod (23), wherein said point of intersection defines a center of instantaneous rotation (CIR) of said connecting rod (22).

2. A motorcycle (1) according to claim 1, wherein the rotation axis of said first drive element (51) is coaxial with the rotation axis of said second drive element (52), and wherein the rotation axis of said intermediate drive element (53) is parallel to and not coaxial with said rotation axis (201) of said first drive element (51).

3. A motorcycle (1) according to claim 2, wherein said second rotation axis (32) about which said connecting rod (22) rotates with respect to said swingarm (21) is coaxial with the rotation axis of said first drive element (51).

4. A motorcycle (1) according to one of the claims from 1 to 3, wherein:
- said first drive element (51) comprises a first toothed wheel (51A) defined at the end of a first shaft (51B) which is rotatable with respect to said swingarm (21);
- said second drive element (52) comprises a second toothed wheel (52A) defined at the end of a second shaft (52B) which is integral with said rear wheel (13); and
- said intermediate drive element (53) comprises a third toothed wheel (53A), which engages said first toothed wheel (51A) and said second toothed wheel (52A), said intermediate drive element (53) further comprising a third shaft (53B) rotatably supported by said connecting rod (22).

5. A motorcycle (1) according to claim 4, wherein said connecting rod (22) comprises two opposite portions (22A) hinged about said first shaft (51B) and said second shaft (52B), respectively, said connecting rod (22) comprising a transverse portion (22B) which connects said opposite portions (22A), said rod (23) being connected to said connecting rod (22) at said transverse portion (22B).

6. A motorcycle (1) according to one of the claims from 1 to 3, wherein said second drive unit comprises a plurality of said intermediate drive elements (53) operatively connected to said first drive element (51) and to said second drive element (52) so as to configure an epicyclic gear.

7. A motorcycle (1) according to claim 6, wherein:
- said first drive element (51) comprises a first toothed wheel (51A) defined at the end of a first shaft (51B) which is rotatable with respect to said swingarm (21);
- said second drive element (52) comprises a second shaft (52B), which is integral with said rear wheel (13), supporting an inner crown gear (52A); and wherein
- said intermediate drive elements (53) each comprise a satellite toothed wheel (53A) which engages said first toothed wheel (51A) and said inner crown gear (52A), said intermediate drive elements (53) each comprising a shaft (53B) which supports the corresponding satellite toothed wheel (53A) and is hinged to said connecting rod (22).

8. A motorcycle (1) according to any one of the claims from 1 to 7, wherein said motorcycle (1) comprises adjustment means (70) for varying the position of at least one of said rotation axes (31, 32, 33, 34) with respect to the position of said other rotation axes.

9. A motorcycle (1) according to claim 8, wherein said adjustment means (70) are configured to vary the position of said fourth rotation axis (34).

10. A motorcycle (1) comprising a frame (12) and a rear wheel (13) operatively connected to said frame (12) by means of a rear suspension comprising a swingarm (21) hinged to said frame (12) so as to rotate about a first rotation axis (31), said frame (12) supporting a motor and a mechanical drive to transfer a torque generated by said motor (100) to said rear wheel (13), said mechanical drive comprising at least a first drive element (51) hinged to said swingarm (21) and a first drive unit to transfer said torque to said first drive element (51), wherein said first drive unit comprises a pinion, hinged to said frame (12) and operated by said motor (100), a crown gear which is integral with said first drive element (51), and a chain between said pinion and said crown gear,
wherein said mechanical drive comprises a second drive unit for transmitting the motion from said first drive element (51) to said rear wheel (13), wherein said second drive unit comprises at least a second drive element (52) which is rotationally integral with said rear wheel (13) and at least one intermediate drive element (53) for transmitting the motion from said first drive element (51) to said second drive element (52),
wherein said rear suspension further comprises a connecting rod (22) hinged to said swingarm (21) so as to rotate about a second rotation axis (32), wherein said connecting rod (22) supports said at least one intermediate drive element (53), said rear suspension further comprising a rod (23) rotatably connected to said connecting rod (22) so as to rotate about a third rotation axis (33) and rotatably connected to said frame (12) so as to rotate about a fourth rotation axis (34), and
wherein said rod (23) and said swingarm (21) are prepared so as to define a point of intersection between the direction of extension (401) of the swingarm (21) and the direction of extension (402) of the rod (23), wherein said point of intersection defines a center of instantaneous rotation (CIR) of said connecting rod (22).

11. A motorcycle (1) according to claim 10, wherein the rotation axis of said first drive element (51) is coaxial with the rotation axis of said second drive element (52), and wherein the rotation axis of said intermediate drive element (53) is parallel to and not coaxial with said rotation axis (201) of said first drive element (51).

12. A motorcycle (1) according to claim 11, wherein said second rotation axis (32) about which said connecting rod (22) rotates with respect to said swingarm (21) is coaxial with the rotation axis of said first drive element (51).

13. A motorcycle (1) according to one of the claims from 10 to 12, wherein:
- said first drive element (51) comprises a first toothed wheel (51A) defined at the end of a first shaft (51B) which is rotatable with respect to said swingarm (21);
- said second drive element (52) comprises a second toothed wheel (52A) defined at the end of a second shaft (52B) which is integral with said rear wheel (13); and
- said intermediate drive element (53) comprises a third toothed wheel (53A), which engages said first toothed wheel (51A) and said second toothed wheel (52A), said intermediate drive element (53) further comprising a third shaft (53B) rotatably supported by said connecting rod (22).

14. A motorcycle (1) according to claim 13, wherein said connecting rod (22) comprises two opposite portions (22A) hinged about said first shaft (51B) and said second shaft (52B), respectively, said connecting rod (22) comprising a transverse portion (22B) which connects said opposite portions (22A), said rod (23) being connected to said connecting rod (22) at said transverse portion (22B).

15. A motorcycle (1) according to one of the claims from 10 to 12, wherein said second drive unit comprises a plurality of said intermediate drive elements (53) operatively connected to said first drive element (51) and to said second drive element (52) so as to configure an epicyclic gear.

16. A motorcycle (1) according to claim 15, wherein:
- said first drive element (51) comprises a first toothed wheel (51A) defined at the end of a first shaft (51B) which is rotatable with respect to said swingarm (21);
- said second drive element (52) comprises a second shaft (52B), which is integral with said rear wheel (13), supporting an inner crown gear (52A); and wherein
- said intermediate drive elements (53) each comprise a satellite toothed wheel (53A) which engages said first toothed wheel (51A) and said inner crown gear (52A), said intermediate drive elements (53) each comprising a shaft (53B) which supports the corresponding satellite toothed wheel (53A) and is hinged to said connecting rod (22).

17. A motorcycle (1) according to any one of the claims from 10 to 16, wherein said motorcycle (1) comprises adjustment means (70) for varying the position of at least one of said rotation axes (31, 32, 33, 34) with respect to the position of said other rotation axes.

18. A motorcycle (1) according to claim 17, wherein said adjustment means (70) are configured to vary the position of said fourth rotation axis (34).

## Patentansprüche

1. Motorrad (1) vom Rollertyp, umfassend einen Rahmen (12) und ein Hinterrad (13), das mit dem Rahmen (12) mittels einer Hinteraufhängung betriebswirksam verbunden ist, umfassend einen Schwingarm (21), der an dem Rahmen (12) angelenkt ist, um sich um eine erste Drehachse (31) zu drehen, wobei der Schwingarm (21) einen Motor (100) trägt, der mit dem Schwingarm (21) um die erste Drehachse (31) oszilliert, wobei das Motorrad (1) einen mechanischen Antrieb zum Übertragen eines von dem Motor (100) erzeugten Drehmoments auf das Hinterrad (13) umfasst, wobei der mechanische Antrieb mindestens ein erstes Antriebselement (51), das am Schwingarm (21) angelenkt ist, und eine erste Antriebseinheit zum Drehen des ersten Antriebselements (51) umfasst, wobei die erste Antriebseinheit von dem Motor (100) betrieben und vom Schwingarm (21) getragen ist,
wobei der mechanische Antrieb eine zweite Antriebseinheit zum Übertragen der Bewegung von dem ersten Antriebselement (51) auf das Hinterrad (13) umfasst, wobei die zweite Antriebseinheit mindestens ein zweites Antriebselement (52), das drehfest mit dem Hinterrad (13) ist, und mindestens ein Zwischenantriebselement (53) zum Übertragen der Bewegung von dem ersten Antriebselement (51) auf das zweite Antriebselement (52) umfasst,
wobei die Hinteraufhängung ferner eine Verbindungsstange (22) umfasst, die am Schwingarm (21) angelenkt ist, um sich um eine zweite Drehachse (32) zu drehen, wobei die Verbindungsstange (22) das mindestens eine Zwischenantriebselement (53) trägt, wobei die Hinteraufhängung ferner eine Stange (23) umfasst, die drehbar mit der Verbindungsstange (22) verbunden ist, um sich um eine dritte Drehachse (33) zu drehen, und drehbar mit dem Rahmen (12) verbunden ist, um sich um eine vierte Drehachse (34) zu drehen, und
wobei die Stange (23) und der Schwingarm (21) so bereitgestellt sind, dass sie einen Schnittpunkt zwischen der Erstreckungsrichtung (401) des Schwingarms (21) und der Erstreckungsrichtung (402) der Stange (23) definieren, wobei der Schnittpunkt einen Mittelpunkt der momentanen Drehung (CIR) der Verbindungsstange (22) definiert.

2. Motorrad (1) nach Anspruch 1, wobei die Drehachse des ersten Antriebselements (51) koaxial mit der Drehachse des zweiten Antriebselements (52) ist und wobei die Drehachse des Zwischenantriebselements (53) parallel zu und nicht koaxial mit der Drehachse (201) des ersten Antriebselements (51) ist.

3. Motorrad (1) nach Anspruch 2, wobei die zweite Drehachse (32), um die sich die Verbindungsstange (22) in Bezug auf den Schwingarm (21) dreht, koaxial mit der Drehachse des ersten Antriebselements (51) ist.

4. Motorrad (1) nach einem der Ansprüche 1 bis 3, wobei:
- das erste Antriebselement (51) ein erstes Zahnrad (51A) umfasst, das am Ende einer ersten Welle (51B) definiert ist, die in Bezug auf den Schwingarm (21) drehbar ist;
- das zweite Antriebselement (52) ein zweites Zahnrad (52A) umfasst, das am Ende einer zweiten Welle (52B) definiert ist, die einstückig mit dem Hinterrad (13) ist; und
- das Zwischenantriebselement (53) ein drittes Zahnrad (53A) umfasst, das mit dem ersten Zahnrad (51A) und dem zweiten Zahnrad (52A) in Eingriff steht, wobei das Zwischenantriebselement (53) ferner eine dritte Welle (53B) umfasst, die drehbar von der Verbindungsstange (22) getragen ist.

5. Motorrad (1) nach Anspruch 4, wobei die Verbindungsstange (22) zwei gegenüberliegende Abschnitte (22A) umfasst, die jeweils um die erste Welle (51B) und die zweite Welle (52B) angelenkt sind, wobei die Verbindungsstange (22) einen Querabschnitt (22B) umfasst, der die gegenüberliegenden Abschnitte (22A) verbindet, wobei die Stange (23) an dem Querabschnitt (22B) mit der Verbindungsstange (22) verbunden ist.

6. Motorrad (1) nach einem der Ansprüche 1 bis 3, wobei die zweite Antriebseinheit eine Vielzahl der Zwischenantriebselemente (53) umfasst, die betriebswirksam mit dem ersten Antriebselement (51) und dem zweiten Antriebselement (52) verbunden sind, um ein Planetengetriebe zu konfigurieren.

7. Motorrad (1) nach Anspruch 6, wobei:
- das erste Antriebselement (51) ein erstes Zahnrad (51A) umfasst, das am Ende einer ersten Welle (51B) definiert ist, die in Bezug auf den Schwingarm (21) drehbar ist;
- das zweite Antriebselement (52) eine zweite Welle (52B) umfasst, die einstückig mit dem Hinterrad (13) ist und einen inneren Zahnkranz (52A) trägt; und wobei
- die Zwischenantriebselemente (53) jeweils ein Satellitenzahnrad (53A) umfassen, das mit dem ersten Zahnrad (51A) und dem inneren Zahnkranz (52A) in Eingriff steht, wobei die Zwischenantriebselemente (53) jeweils eine Welle (53B) umfassen, die das entsprechende Satellitenzahnrad (53A) trägt und an der Verbindungsstange (22) angelenkt ist.

8. Motorrad (1) nach einem der Ansprüche 1 bis 7, wobei das Motorrad (1) Einstellmittel (70) zum Variieren der Position von mindestens einer der Drehachsen (31, 32, 33, 34) in Bezug auf die Position der anderen Drehachsen umfasst.

9. Motorrad (1) nach Anspruch 8, wobei die Einstellmittel (70) konfiguriert sind, um die Position der vierten Drehachse (34) zu variieren.

10. Motorrad (1) umfassend einen Rahmen (12) und ein Hinterrad (13), das mittels einer Hinteraufhängung mit dem Rahmen (12) betriebswirksam verbunden ist, umfassend einen Schwingarm (21), der am Rahmen (12) angelenkt ist, um sich um eine erste Drehachse (31) zu drehen, wobei der Rahmen (12) einen Motor und einen mechanischen Antrieb zum Übertragen eines von dem Motor (100) erzeugten Drehmoments auf das Hinterrad (13) trägt, wobei der mechanische Antrieb mindestens ein erstes Antriebselement (51), das am Schwingarm (21) angelenkt ist, und eine erste Antriebseinheit zum Übertragen des Drehmoments auf das erste Antriebselement (51) umfasst, wobei die erste Antriebseinheit ein Ritzel, das an dem Rahmen (12) angelenkt ist und von dem Motor (100) betrieben wird, einen Zahnkranz, der mit dem ersten Antriebselement (51) einstückig ist, und eine Kette zwischen dem Ritzel und dem Zahnkranz umfasst,
wobei der mechanische Antrieb eine zweite Antriebseinheit zum Übertragen der Bewegung von dem ersten Antriebselement (51) auf das Hinterrad (13) umfasst, wobei die zweite Antriebseinheit mindestens ein zweites Antriebselement (52), das drehfest mit dem Hinterrad (13) ist, und mindestens ein Zwischenantriebselement (53) zum Übertragen der Bewegung von dem ersten Antriebselement (51) auf das zweite Antriebselement (52) umfasst,
wobei die Hinteraufhängung ferner eine Verbindungsstange (22) umfasst, die am Schwingarm (21) angelenkt ist, um sich um eine zweite Drehachse (32) zu drehen, wobei die Verbindungsstange (22) das mindestens eine Zwischenantriebselement (53) trägt, wobei die Hinteraufhängung ferner eine Stange (23) umfasst, die drehbar mit der Verbindungsstange (22) verbunden ist, um sich um eine dritte Drehachse (33) zu drehen, und drehbar mit dem Rahmen (12) verbunden ist, um sich um eine vierte Drehachse (34) zu drehen, und
wobei die Stange (23) und der Schwingarm (21) so bereitgestellt sind, dass sie einen Schnittpunkt zwischen der Erstreckungsrichtung (401) des Schwingarms (21) und der Erstreckungsrichtung (402) der Stange (23) definieren, wobei der Schnittpunkt einen Mittelpunkt der momentanen Drehung (CIR) der Verbindungsstange (22) definiert.

11. Motorrad (1) nach Anspruch 10, wobei die Drehachse des ersten Antriebselements (51) koaxial mit der Drehachse des zweiten Antriebselements (52) ist und wobei die Drehachse des Zwischenantriebselements (53) parallel zu und nicht koaxial mit der Drehachse (201) des ersten Antriebselements (51) ist.

12. Motorrad (1) nach Anspruch 11, wobei die zweite Drehachse (32), um die sich die Verbindungsstange (22) in Bezug auf den Schwingarm (21) dreht, koaxial mit der Drehachse des ersten Antriebselements (51) ist.

13. Motorrad (1) nach einem der Ansprüche 10 bis 12, wobei:
- das erste Antriebselement (51) ein erstes Zahnrad (51A) umfasst, das am Ende einer ersten Welle (51B) definiert ist, die in Bezug auf den Schwingarm (21) drehbar ist;
- das zweite Antriebselement (52) ein zweites Zahnrad (52A) umfasst, das am Ende einer zweiten Welle (52B) definiert ist, die einstückig mit dem Hinterrad (13) ist; und
- das Zwischenantriebselement (53) ein drittes Zahnrad (53A) umfasst, das mit dem ersten Zahnrad (51A) und dem zweiten Zahnrad (52A) in Eingriff steht, wobei das Zwischenantriebselement (53) ferner eine dritte Welle (53B) umfasst, die drehbar von der Verbindungsstange (22) getragen ist.

14. Motorrad (1) nach Anspruch 13, wobei die Verbindungsstange (22) zwei gegenüberliegende Abschnitte (22A) umfasst, die jeweils um die erste Welle (51B) und die zweite Welle (52B) angelenkt sind, wobei die Verbindungsstange (22) einen Querabschnitt (22B) umfasst, der die gegenüberliegenden Abschnitte (22A) verbindet, wobei die Stange (23) an dem Querabschnitt (22B) mit der Verbindungsstange (22) verbunden ist.

15. Motorrad (1) nach einem der Ansprüche 10 bis 12, wobei die zweite Antriebseinheit eine Vielzahl der Zwischenantriebselemente (53) umfasst, die betriebswirksam mit dem ersten Antriebselement (51) und dem zweiten Antriebselement (52) verbunden sind, um ein Planetengetriebe zu konfigurieren.

16. Motorrad (1) nach Anspruch 15, wobei:
- das erste Antriebselement (51) ein erstes Zahnrad (51A) umfasst, das am Ende einer ersten Welle (51B) definiert ist, die in Bezug auf den Schwingarm (21) drehbar ist;
- das zweite Antriebselement (52) eine zweite Welle (52B) umfasst, die einstückig mit dem Hinterrad (13) ist und einen inneren Zahnkranz (52A) trägt; und wobei
- die Zwischenantriebselemente (53) jeweils ein Satellitenzahnrad (53A) umfassen, das mit dem ersten Zahnrad (51A) und dem inneren Zahnkranz (52A) in Eingriff steht, wobei die Zwischenantriebselemente (53) jeweils eine Welle (53B) umfassen, die das entsprechende Satellitenzahnrad (53A) trägt und an der Verbindungsstange (22) angelenkt ist.

17. Motorrad (1) nach einem der Ansprüche 10 bis 16, wobei das Motorrad (1) Einstellmittel (70) zum Variieren der Position von mindestens einer der Drehachsen (31, 32, 33, 34) in Bezug auf die Position der anderen Drehachsen umfasst.

18. Motorrad (1) nach Anspruch 17, wobei die Einstellmittel (70) konfiguriert sind, um die Position der vierten Drehachse (34) zu variieren.

## Revendications

1. Motocyclette (1) du type scooter, comprenant un cadre (12) et une roue arrière (13) reliée de manière opérationnelle audit cadre (12) au moyen d'une suspension arrière comprenant un bras oscillant (21) articulé audit cadre (12) de manière à tourner autour d'un premier axe de rotation (31), dans lequel ledit bras oscillant (21) supporte un moteur (100) qui oscille avec ledit bras oscillant (21) autour dudit premier axe de rotation (31), dans laquelle ladite motocyclette (1) comprend un entraînement mécanique pour transférer un couple généré par ledit moteur (100) à ladite roue arrière (13), ledit entraînement mécanique comprenant au moins un premier élément d'entraînement (51) articulé sur ledit bras oscillant (21) et une première unité d'entraînement pour faire tourner ledit premier élément d'entraînement (51), dans laquelle ladite première unité d'entraînement est actionnée par ledit moteur (100) et supportée par ledit bras oscillant (21),
dans laquelle ledit entraînement mécanique comprend une deuxième unité d'entraînement pour transmettre le mouvement dudit premier élément d'entraînement (51) à ladite roue arrière (13), dans laquelle ladite deuxième unité d'entraînement comprend au moins un deuxième élément d'entraînement (52) qui est solidaire en rotation de ladite roue arrière (13) et au moins un élément d'entraînement intermédiaire (53) pour transmettre le mouvement dudit premier élément d'entraînement (51) audit deuxième élément d'entraînement (52),
dans laquelle ladite suspension arrière comprend en outre une bielle (22) articulée sur ledit bras oscillant (21) de manière à tourner autour d'un deuxième axe de rotation (32), dans laquelle ladite bielle (22) supporte ledit au moins un élément d'entraînement intermédiaire (53), ladite suspension arrière comprenant en outre une tige (23) reliée de manière rotative à ladite bielle (22) de manière à tourner autour d'un troisième axe de rotation (33) et reliée de manière rotative audit cadre (12) de manière à tourner autour d'un quatrième axe de rotation (34), et
dans laquelle ladite tige (23) et ledit bras oscillant (21) sont préparés de manière à définir un point d'intersection entre la direction d'extension (401) du bras oscillant (21) et la direction d'extension (402) de la tige (23), dans laquelle ledit point d'intersection définit un centre de rotation instantané (CIR) de ladite bielle (22).

2. Motocyclette (1) selon la revendication 1, dans laquelle l'axe de rotation dudit premier élément d'entraînement (51) est coaxial avec l'axe de rotation dudit deuxième élément d'entraînement (52), et dans laquelle l'axe de rotation dudit élément d'entraînement intermédiaire (53) est parallèle et non coaxial avec ledit axe de rotation (201) dudit premier élément d'entraînement (51).

3. Motocyclette (1) selon la revendication 2, dans laquelle ledit deuxième axe de rotation (32) autour duquel ladite bielle (22) tourne par rapport audit bras oscillant (21) est coaxial avec l'axe de rotation dudit premier élément d'entraînement (51).

4. Motocyclette (1) selon l'une des revendications de 1 à 3, dans laquelle :
- ledit premier élément d'entraînement (51) comprend une première roue dentée (51A) définie à l'extrémité d'un premier arbre (51B) qui est rotatif par rapport audit bras oscillant (21) ;
- ledit deuxième élément d'entraînement (52) comprend une deuxième roue dentée (52A) définie à l'extrémité d'un deuxième arbre (52B) qui fait partie intégrante de ladite roue arrière (13) ; et
- ledit élément d'entraînement intermédiaire (53) comprend une troisième roue dentée (53A) qui engage ladite première roue dentée (51A) et ladite deuxième roue dentée (52A), ledit élément d'entraînement intermédiaire (53) comprenant en outre un troisième arbre (53B) supporté de manière rotative par ladite bielle (22).

5. Motocyclette (1) selon la revendication 4, dans laquelle ladite bielle (22) comprend deux parties opposées (22A) articulées autour dudit premier arbre (51B) et dudit deuxième arbre (52B), respectivement, ladite bielle (22) comprenant une partie transversale (22B) qui relie lesdites parties opposées (22A), ladite tige (23) étant reliée à ladite bielle (22) au niveau de ladite partie transversale (22B).

6. Motocyclette (1) selon l'une des revendications de 1 à 3, dans laquelle ladite deuxième unité d'entraînement comprend une pluralité d'éléments d'entraînement intermédiaires (53) reliés de manière opérationnelle audit premier élément d'entraînement (51) et audit deuxième élément d'entraînement (52) de manière à configurer un engrenage épicycloïdal.

7. Motocyclette (1) selon la revendication 6, dans laquelle :
- ledit premier élément d'entraînement (51) comprend une première roue dentée (51A) définie à l'extrémité d'un premier arbre (51B) qui est rotatif par rapport audit bras oscillant (21) ;
- ledit deuxième élément d'entraînement (52) comprend un deuxième arbre (52B), qui est solidaire de ladite roue arrière (13), supportant une couronne dentée intérieure (52A) ; et dans laquelle
- lesdits éléments d'entraînement intermédiaires (53) comprennent chacun une roue dentée satellite (53A) qui engage ladite première roue dentée (51A) et ladite couronne dentée intérieure (52A), lesdits éléments d'entraînement intermédiaires (53) comprenant chacun un arbre (53B) qui supporte la roue dentée satellite correspondante (53A) et qui est articulé à ladite bielle (22).

8. Motocyclette (1) selon l'une quelconque des revendications de 1 à 7, dans laquelle ladite motocyclette (1) comprend des moyens de réglage (70) pour faire varier la position d'au moins un desdits axes de rotation (31, 32, 33, 34) par rapport à la position desdits autres axes de rotation.

9. Motocyclette (1) selon la revendication 8, dans laquelle lesdits moyens de réglage (70) sont configurés pour faire varier la position dudit quatrième axe de rotation (34).

10. Motocyclette (1) comprenant un cadre (12) et une roue arrière (13) reliée de manière opérationnelle audit cadre (12) au moyen d'une suspension arrière comprenant un bras oscillant (21) articulé audit cadre (12) de manière à tourner autour d'un premier axe de rotation (31), ledit cadre (12) supportant un moteur et un entraînement mécanique pour transférer un couple généré par ledit moteur (100) à ladite roue arrière (13), ledit entraînement mécanique comprenant au moins un premier élément d'entraînement (51) articulé sur ledit bras oscillant (21) et une première unité d'entraînement pour transférer ledit couple audit premier élément d'entraînement (51), dans laquelle ladite première unité d'entraînement comprend un pignon, articulé sur ledit cadre (12) et actionné par ledit moteur (100), une couronne dentée qui est solidaire dudit premier élément d'entraînement (51), et une chaîne entre ledit pignon et ladite couronne dentée,
dans laquelle ledit entraînement mécanique comprend une deuxième unité d'entraînement pour transmettre le mouvement dudit premier élément d'entraînement (51) à ladite roue arrière (13), dans laquelle ladite deuxième unité d'entraînement comprend au moins un deuxième élément d'entraînement (52) qui est solidaire en rotation de ladite roue arrière (13) et au moins un élément d'entraînement intermédiaire (53) pour transmettre le mouvement dudit premier élément d'entraînement (51) audit deuxième élément d'entraînement (52),
dans laquelle ladite suspension arrière comprend en outre une bielle (22) articulée sur ledit bras oscillant (21) de manière à tourner autour d'un deuxième axe de rotation (32), dans laquelle ladite bielle (22) supporte ledit au moins un élément d'entraînement intermédiaire (53), ladite suspension arrière comprenant en outre une tige (23) reliée de manière rotative à ladite bielle (22) de manière à tourner autour d'un troisième axe de rotation (33) et reliée de manière rotative audit cadre (12) de manière à tourner autour d'un quatrième axe de rotation (34), et
dans laquelle ladite tige (23) et ledit bras oscillant (21) sont préparés de manière à définir un point d'intersection entre la direction d'extension (401) du bras oscillant (21) et la direction d'extension (402) de la tige (23), dans laquelle ledit point d'intersection définit un centre de rotation instantané (CIR) de ladite bielle (22).

11. Motocyclette (1) selon la revendication 10, dans laquelle l'axe de rotation dudit premier élément d'entraînement (51) est coaxial avec l'axe de rotation dudit deuxième élément d'entraînement (52), et dans laquelle l'axe de rotation dudit élément d'entraînement intermédiaire (53) est parallèle et non coaxial avec ledit axe de rotation (201) dudit premier élément d'entraînement (51).

12. Motocyclette (1) selon la revendication 11, dans laquelle ledit deuxième axe de rotation (32) autour duquel ladite bielle (22) tourne par rapport audit bras oscillant (21) est coaxial avec l'axe de rotation dudit premier élément d'entraînement (51).

13. Motocyclette (1) selon l'une des revendications de 10 à 12, dans laquelle :
- ledit premier élément d'entraînement (51) comprend une première roue dentée (51A) définie à l'extrémité d'un premier arbre (51B) qui est rotatif par rapport audit bras oscillant (21) ;
- ledit deuxième élément d'entraînement (52) comprend une deuxième roue dentée (52A) définie à l'extrémité d'un deuxième arbre (52B) qui fait partie intégrante de ladite roue arrière (13) ; et
- ledit élément d'entraînement intermédiaire (53) comprend une troisième roue dentée (53A) qui engage ladite première roue dentée (51A) et ladite deuxième roue dentée (52A), ledit élément d'entraînement intermédiaire (53) comprenant en outre un troisième arbre (53B) supporté de manière rotative par ladite bielle (22).

14. Motocyclette (1) selon la revendication 13, dans laquelle ladite bielle (22) comprend deux parties opposées (22A) articulées autour dudit premier arbre (51B) et dudit deuxième arbre (52B), respectivement, ladite bielle (22) comprenant une partie transversale (22B) qui relie lesdites parties opposées (22A), ladite tige (23) étant reliée à ladite bielle (22) au niveau de ladite partie transversale (22B).

15. Motocyclette (1) selon l'une des revendications de 10 à 12, dans laquelle ladite deuxième unité d'entraînement comprend une pluralité d'éléments d'entraînement intermédiaires (53) reliés de manière opérationnelle audit premier élément d'entraînement (51) et audit deuxième élément d'entraînement (52) de manière à configurer un engrenage épicycloïdal.

16. Motocyclette (1) selon la revendication 15, dans laquelle :
- ledit premier élément d'entraînement (51) comprend une première roue dentée (51A) définie à l'extrémité d'un premier arbre (51B) qui est rotatif par rapport audit bras oscillant (21) ;
- ledit deuxième élément d'entraînement (52) comprend un deuxième arbre (52B), qui est solidaire de ladite roue arrière (13), supportant une couronne dentée intérieure (52A) ; et dans laquelle
- lesdits éléments d'entraînement intermédiaires (53) comprennent chacun une roue dentée satellite (53A) qui engage ladite première roue dentée (51A) et ladite couronne dentée intérieure (52A), lesdits éléments d'entraînement intermédiaires (53) comprenant chacun un arbre (53B) qui supporte la roue dentée satellite correspondante (53A) et qui est articulé à ladite bielle (22).

17. Motocyclette (1) selon l'une quelconque des revendications de 10 à 16, dans laquelle ladite motocyclette (1) comprend des moyens de réglage (70) pour faire varier la position d'au moins un desdits axes de rotation (31, 32, 33, 34) par rapport à la position desdits autres axes de rotation.

18. Motocyclette (1) selon la revendication 17, dans laquelle lesdits moyens de réglage (70) sont configurés pour faire varier la position dudit quatrième axe de rotation (34).
